# EUROPEAN PATENT APPLICATION

(11) **EP 2 860 030 A1**
(43) Date of publication of application: **15.04.2015**
(21) Application number: 14185639.3
(22) Date of filing: 19.09.2014
(51) Int. Cl.: B32B 27/00

(54) **Composite Film Assemblies Having Sealing And Barrier Properties For Use As In-Mold Labels, Articles With In-Mold Labels, And Methods Of Making Same**

(30) Priority: 20.09.2013 US 201314032818
(71) Applicant: Precision Press, Inc., Mancato, MN 56003 (US)
(72) Inventor: Timmerman,, Lee A., North Mankato, MN Minnesota 56003 (US); Ratcliff,, Chad M., North Mankato, MN Minnesota 56003 (US); Richmond,, Dennis W., North Mankato, MN Minnesota 56003 (US); Gravley,, Lane H., North Mankato, MN Minnesota 56003 (US)
(74) Representative: Harris, Oliver John Richard

(57) **Abstract**

Composite film assemblies, in-mold label formed from the composite film assemblies, and articles incorporating in-mold labels. Film assemblies according to embodiments of the invention include multi-layer or composite films that include one or more optional layers of a barrier material sandwiched between films, such as heat sealable films. The composite films can be used to form labels in standard in-mold labeling processes such that standard robotics, molds, and materials can be used. The composite film assembly can seal on itself or other similar compatible films when overlapped such that a complete overlap seam is formed without edge lift or curl. The composite film assembly can be tailored to have certain barrier properties depending on the end-use application of the molded article, such as packaging of consumable products.

## Description

### RELATED APPLICATION

The present application claims priority to U.S. Patent Application Serial No. 14/032,818, filed September 20, 2013, which is incorporated by reference in its entirety.

### TECHNICAL FIELD

The invention relates generally to in-mold label technology, and more specifically to heat-sealable composite film assemblies having optional barrier properties for use in in-mold label technologies, and molded containers incorporating such film assemblies.

### BACKGROUND

In-mold labeling (IML) is the use of paper or plastic labels during the manufacturing of containers or other articles by blow molding, injection molding, or thermoforming processes. The label or insert serves as the integral part of the final product, which is then delivered as pre-decorated item.

IML is primarily used today for decorating injection molded parts for consumer electronics and for plastic cups and bottles. Manufacturers are adopting IML technology for greater wear resistance than traditional printing of molded articles, and for better adhesion to the underlying molded article or container. This is because a film, such as a transparent polymeric film, is printed on one side with decorative ink. The printed film is converted into a label, which is then positioned on a mold wall of an injection molding die or tool. Injection plastic, in the form of a heated or molten plastic shot, is introduced into the mold in contact with one side of the film, either the ink side (with protective layers therebetween) or the non-ink side. When the plastic shot material is introduced such that it is proximate the ink side of the label, this fuses or bonds to a non-printed surface of the label, and encapsulates the decoration between the film layer of the label and the injected plastic resulting in a decoration that cannot be abraded during use.

Further, IML can provide greater decorating options than other methods. For example, multi-color offset lithography printed graphics or digital graphics are used to produce products with higher quality graphics than available with other decorating methods.

During the molding process, robotics can be used to sense and position a label in the mold or tool, such as a steel mold. Vacuum and compressed air can be used to hold the label in place during the molding process. Alternatively, static electricity can be used. In the case of static, electrostatic charging electrodes electrostatically charge a label while it is being transferred to the molding machine, so that when the label is placed on the tool and released by the labeling robot, it will wrap itself onto or into the oppositely charged tool, and remain on the tool until the article is molded and cooled.

The in-mold labels can be formed from paper and/or a polymeric material that is a similar or compatible material to the plastic shot material. For example, polypropylene or polystyrene is commonly used as label material, with a thickness ranging from about 15 to 100 micrometers; however the thickness of the label can be thinner or thicker than the exemplary, non-limiting range, depending on the final application or desired molded product. For example, for handling and structural integrity of a molded container, a label thickness in excess of 100 micrometers may be desired. Applications for molded products that are instead lightweight and have complex shapes such that conformity to shape is desired do not require excessive structural integrity, and/or for the purpose of keeping manufacturing and shipping costs down, labels less than 15 micrometers in thickness can be contemplated.

Cavitated materials can also be used. Cavitated materials are sandwich or layered materials, having a spongy layer bonded between two or more very thin solid, or functional layers. An advantage of cavitated film is better conformance to small-radius curves on a product. Laminated films can also be used, with or without cavitated materials, to decorate products, yielding high wear-resistance. This type of film can have the printed surface protected by a second layer of film, such that the label has a total thickness of about 15 or 40 micrometers; however, as described above the thickness of the label can be thinner or thicker than the exemplary, non-limiting range, depending on the final application or desired molded product.

The standard films used in in-mold labeling are inherently good or excellent water vapor barriers. However, they are not oxygen barriers, which can be desired for packaging of certain consumable products. The following table, available on http://www.alphap.com/basics/compare.html, is an example of typical oxygen, carbon dioxide, and moisture or water vapor transition rates of common types of films used in packaging, wherein MVTR stands for Moisture Vapor Transmission Rate in g-mil/100in.²/24hr, and 02 and CO2 stand for Oxygen Transmission Rate (OTR) and Carbon Dioxide Transmission Rate (COTR), respectively, in cm³-mil/m²/24hr.

**Table 1: Barrier Properties of Various Polymer Films**

| Material | MVTR | O2TR | CO2TR |
|---|---|---|---|
| PET (Oriented or Stretch Blown Polyethylene Terephthalate) | 2.0 | 75 | 540 |
| HDPE (High Density Polyethylene) | 0.5 | 4,000 | 18,000 |
| PVC (Polyvinyl Chloride) | 3.0 | 150 | 380 |
| PP (Polypropylene) | 0.5 | 3,500 | 7,000 |
| PS (Polystyrene) | 10.0 | 6,000 | 18,700 |
| PLA (Polylactide - Oriented/Stretch Blown bottles) | 18-22 | 38-42 | 201 |

One non-limiting example of desired barrier properties for packaging of consumable products include a Water Vapor Transmission Rate (WVTR) of 0.010 g/100in²/day at 84.4°F/80%RH and an Oxygen Transmission Rate (O2TR) of 0.0041 cc/100in²/day at 73°F/0%RH. Other barrier properties, in addition to or alternatively to water vapor and oxygen, can also be desired depending on the product being molded and its final use or application. Such properties can include, but are not limited to, light (e.g. UV), aroma, and/or flavor retention. The desired barrier properties of the final molded product are application specific and depends on, for example, the product being contained within the molded article, the perceived shelf life of the product, the sensitivity of the product to environmental factors, and/or the different spoilage or failure mechanisms that define when the product has "expired" or "gone bad." Because existing in-mold technologies do not offer many of the desired barrier properties for consumable product, applications of the existing in-mold technologies is therefore limited to containers such as cups or other decorative articles, and are not used for packaging consumable products or products that cannot be stored without refrigeration, freezing, or a sterile environment, including, but not limited to, liquid and solid foods, medications, toiletries such as perfumes and toothpaste, beverages, paints, adhesives, or the like.

Films with both water vapor and oxygen barrier properties are commonly used in the pouching industry for packaging of foods such as fatty foods, sauces and liquids, items requiring hermetical sealing such as medical devices or instruments, medicines, and the like. These films are typically multi-layer or composite films that include a barrier film and are specifically constructed based on the intended use of the pouch. These barrier films can include, for example, coextruded, peelable heat-seal films and silicon oxide/aluminum oxide composites, or metallic films or films having a vacuum-deposited layer of metallic material such as an aluminum oxide (Al₂O₃) or a silicon oxide (SiOₓ) such as silica (SiO₂). Some of these can withstand retort or other sterilization (e.g. autoclave) processes that can reach temperatures in excess of 270 degrees Fahrenheit for extended periods of time (e.g. 70 minutes or more) depending on the contents of the pouch and the sterilization needs.

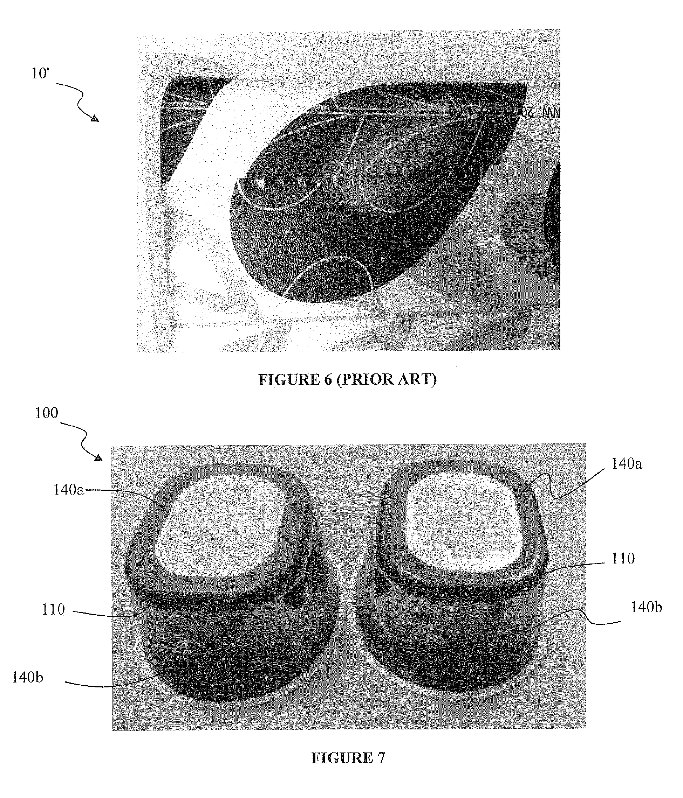

The films used in the pouching industry, however, do not necessarily translate into the inmold labeling industry in certain circumstances. For example, to create an adequate seal in inmold applications in certain applications, an in-mold label is preferably overlapped and sealed onto itself in the molding process to ensure a complete, continuous seal without gaps, breaches in the seal, and/or regions of compromised barrier properties. Often, certain thin solid films used in pouching cannot sufficiently seal to themselves or adjacent films in injection-molded processes. For example, the overlap creates a superficial or compression bond, meaning that they simply compress to lay flat and there is little or no bonding or sealing at the molecular level. This can result in an uneven or unsightly surface having curl, edge lift, or ruffle, as shown in container 10' of Figure 6, and which can be readily picked or peeled open after molding, thereby breaching the seal or barrier and compromising the label, and possibly contents contained within the molded article. Furthermore, these films are sometimes not compatible with the plastic shot materials of the molding process such that the label does not adhere or bond well to the underlying molded article and can peel away from the molded article, therefore breaching the seal or barrier.

In-mold labels having barrier properties have been recently developed. One example of an in-mold label having barrier properties is a composite film that includes a layer of ethyl vinyl alcohol encapsulated or sandwiched between two polymeric layers, such as cast polypropylene, that readily adheres to the underlying shot material to such that the label does not peel away. However, these labels are expensive due to the amount of material needed to create adequate barrier properties. Furthermore, downgauging of these materials is difficult for applications in which conformity to a complex shape is desired, therefore limiting container shape options. Downgauging refers to reducing the amount of material in a product while still maintaining or even improving the properties of that material. When these films are downgauged, the barrier properties are often compromised and/or eliminated. If these films are not downgauged they may be too thick to conform to certain packaging designs, such as those with sharp corners or angles. Significant redesign of the container shape must then be contemplated, such as a container with wider or more rounded edges or corners in order to accommodate in mold applications. This can result in significant time and capital expenditure, such as for new molding dies to be machined, such that the cost of converting to inmold technology may outweigh any benefit.

These labels also are not able to seal upon themselves, as described above, and only form a compression bond, such that a wide overlap cannot be created. Rather, a precise overlap, such as an overlap not exceeding 1 mm, or a butt splice must be created such that the label meets exactly end to end without breach of the barrier. For example, if a wide overlap is created, such as an overlap over one mm, this can create an edge lift, curl, or ruffle in the overlap area, which creates a tab or an area that can be easily lifted or peeled, thereby breaching the barrier. To precisely cut the label side in order to create a narrow overlap (less than one mm) or a butt splice, expensive precision cutting equipment is required. Furthermore, precise registration or placement of the label in the die cavity is critical such that robotic placement systems within the die cavity are required. For example, with respect to if the label is placed too high in a tapering die cavity, a gap between ends of the label is created and filled with standard resin or shot, thereby breaching the barrier. If the label is placed too low, a wide overlap greater than 1 mm or other desired tolerance is formed, thereby creating insufficient sealing resulting in edge lift, curl, or ruffle. Large volumes of waste are generated if the label is neither cut precisely nor placed correctly into the mold.

Finally, these films, although adequate for dry barrier applications such as dry foods, cannot withstand retort or sterilization processes as described above, or other processes performed at high temperatures and/or pressures for extended periods of time, thereby compromising the barrier properties of the film.

There remains a need for a film suitable for use in in-mold labeling technologies that offers adequate barrier properties, such as, but not limited to, water vapor and oxygen barriers, and that can withstand molding processes, retort or other sterilization or pasteurization processes, and other such intense processes without compromising or diminishing the barrier properties.

### SUMMARY OF THE INVENTION

Film assemblies according to embodiments of the invention include multi-layer or composite films that include one or more outer layers of a sealable material, and one or more optional layers of a barrier material. The film assemblies can be used to form labels in standard in-mold labeling processes such that standard robotics, molds, and materials can be used.

Preferably, the film assembly can seal on itself or to an adjacent compatible films or film assemblies with similar construction, such that an integral overlap seam can be made. The overlap seam is created by the fusing or sealing of the films together via molecular bonding at the location of the seam and along substantially an entire region of overlap to create a seal that is more durable than the superficial or compression bonding of the seal of the prior art. Due to bonding at the molecular level to itself or like materials of the film assemblies of the present invention, the seal is more resistant to edge lift or curl, such that it is not readily peeled open. Each portion of the overlap essentially fuses into each other such that there is no distinguished edge of the seal thereby forming a continuous label, and there is no significant difference in thickness of the label at the overlap (due to the fusing of the labels) and an adjacent portion of no overlap.

The film assemblies can also be used in applications in which barrier properties and/or decorative properties are desired, but no overlap is present. For example, in applications in which the molded article is in contact with a foodstuff, such as a plate, cup, or bowl, the composite film assembly can provide a barrier between printing inks, colorants, and/or adhesives and the contents on the plate or in the cup or bowl.

Furthermore, the bonding between layers of the composite film assembly is resistant to delamination at an interface between layers of the composite film assembly. This is achieved by lamination and adhesive and/or coextrusion of layers. Optimally, yet not required in certain applications, a destructible bond or seal is created at the location of the seam, and preferably along substantially all of the overlap region, meaning that failure occurs at a region other than the seam area or the interface between layers of the composite film assembly.

The film assembly further bonds readily to the plastic shot material forming the molded article such that the label is not readily removed or peeled from the molded article after molding. Again, similar to the sealable layers, the layer proximate the plastic shot material bonds to the plastic shot material at a molecular level such that the label is integral with the molded article, thereby making up at least a portion of the wall of the molded article.

In one embodiment, in which the film assembly includes one or more barrier layers, the film assembly has adequate desired barrier properties, which allows for migration into and/or out of the container having the in mold label molded thereto. For example, the one or more barrier layers act as a semi- or impermeable membrane to protect the contents within the molded container from the surrounding environmental exposure that may be harmful to the contained product. The barrier material can include, for example, a barrier for water vapor, oxygen, light (including ultraviolet), aroma, and/or flavor retention barriers depending on the application, such that it can be used for packaging of any of a variety of consumable products including, but not limited to, wet or dry foods, beverages, cosmetics, aromas such as perfumes, toiletries such as hair care, toothpastes, lotions, medical uses such as devices or medicines or ointments, paints, or adhesives.

The film assemblies according to embodiments of the invention are able to withstand extreme processing conditions without compromising the barrier properties of the film. Such conditions can be high temperatures and/or pressures for extended periods of time as a result of retort processing or pasteurization, other sterilization processes such as autoclaving, microwaving, dishwashing, or low temperatures due to freezing or refrigeration.

Additionally, the composite film assemblies according to embodiments of the invention can provide insulation around an injection point in the molded article so as to provide added resistance to deterioration of the barrier layer in the region surrounding the injection point. In standard injection molding equipment, a gate joins melt-delivery channels to a mold cavity. Large volumes of hot resin or material pass through the injection point to the cavity, thereby creating a heat sink at the injection point. This can be a problem for barrier applications of the prior art because this heat sink can cause the film to degrade around the injection point such that the barrier layer is destroyed or breached, referred to as "gate wash", thereby compromising the barrier properties of the film.

In one embodiment of the invention, the composite film assembly is formed from one or more barrier films sandwiched between a heat sealable base film or substrate compatible with inmold processes, i.e. can be readily placed and retained within the mold, and adequately adheres to a plastic shot material and a top layer of heat sealable material. The composite film assembly can also optionally include one or more print layers deposited on the outwardly-facing surface of the top layer and/or buried within the base layer and top layer. The heat sealable material of the top layer and the base layer are compatible such that when an overlap of the film is made, the top layer heat seals, bonds, or otherwise fuses to the outward-facing or bottom surface of the base layer.

The barrier film can comprise a transparent, opaque, or metallized film, such as a carrier film having a barrier layer thereon, such as a thin layer of elemental metal (e.g. Al), a metal oxide (e.g. Al₂O₃, or alumina), or a thin layer of a glass coating formed from materials such as SiOₓ or more particularly silica (SiO₂). For simplicity sake, "metallized layer" as used herein can comprise any of the above metal, metal oxide, or glass layers, or combinations thereof. In an alternative embodiment, the barrier film comprises nanoparticle barrier seal material or coating, such as an aqueous dispersion of barrier particles in a carrier resin, that is dried to leave an aligned plane of platelets or particles to form the barrier seal. This type of barrier coating allows for increased flexibility over solid barrier films without compromising the barrier properties or characteristics of the layer.

The base film or substrate can comprise standard and/or cavitated films depending on the application or the article to be molded. As described above, at least an outer surface of the base layer is made up of a heat sealable material.

The composite films are converted into in-mold labels, such as by standard die converting or laser converting, and used to fabricate articles having barrier properties, such as water vapor barrier properties, oxygen barrier properties, light barrier properties, aroma barrier properties, and/or flavor barrier properties. For example, molded articles incorporating the inmold labels having barrier properties according to embodiments of the invention are application specific, i.e. the barrier properties, and therefore films are selected depending on the desired properties for packaging of a particular product. The barrier properties of the films and containers of the present invention can be individually tailored according to the industry or customer need for a particular packaging application. The in-mold labels, due to their flexibility and overlap sealing capabilities can provide up to 100% barrier or label coverage of a container and full overlap sealing capabilities.

The in-mold labels according to embodiments of the invention are assembled to optionally provide readily moldable substrates combined with sealing capabilities in areas of label overlap with itself or adjacent labels, and optionally provide barrier properties often required for consumable product packaging, ultimately provided new and unique labeling opportunities. The in-mold labels can also withstand extreme processing conditions associated with molding, sterilization processes such as retort processing and pasteurization, cleaning processing such as automatic dishwashing, and the like. The final molded articles can be used for the packaging of consumable products and offer any of a variety of shapes and dimensions, graphics, and may be recyclable depending on the final construction of the film and article, thereby yielding unlimited applications.

Molded articles incorporating in-mold labels according to embodiments of the invention can result in significant cost savings not only due to the added flexibility in label dimensions and overlap, and label placement in the die cavity, but also reduced waste for the end user. For example, dented containers or cans or broken glass due to transportation, storing, and/or display wear and tear are sold at discounted price or discarded all together, resulting in lost revenue. The molded articles, on the other hand, are more resilient to wear and tear.

The above summary of the invention is not intended to describe each illustrated embodiment or every implementation of the present invention. The figures and the detailed description that follow more particularly exemplify these embodiments.

### BRIEF DESCRIPTION OF THE DRAWINGS

The embodiments of the present invention may be more completely understood in consideration of the following detailed description of various embodiments in connection with the accompanying drawings, in which:
Figure 1 is a cross-sectional view of a composite barrier film construction having dual barrier layers and a buried print layer according to one embodiment of the invention for standard in-mold label applications;
Figure 2 is a cross-sectional view of a composite barrier film construction having dual barrier layers and surface printing according to one embodiment of the invention molded to an article;
Figure 3 is a cross-sectional view of a composite barrier film construction for lid sealing applications, the film having a single barrier layer and a buried print layer according to one embodiment of the invention molded to an article;
Figure 4 is a cross-sectional view of a molded article having an in-mold label with barrier properties molded within;
Figure 5 is a flow diagram of a method for molding an article having an in-mold label with barrier properties;
Figure 6 depicts a molded container incorporating an in-mold label of the prior art without sufficient overlap sealing capabilities in regions of overlap;
Figure 7 depicts a molded container incorporating an in-mold labels with overlap onto an adjacent seal to provide full label coverage; and
Figure 8 depicts the molded container of Figure 7 with an overlap seal onto itself.

While the present invention is amenable to various modifications and alternative forms, specifics thereof have been shown by way of example in the drawings and will be described in detail. It should be understood, however, that the intention is not to limit the present invention to the particular embodiments described. On the contrary, the intention is to cover all modifications, equivalents, and alternatives falling within the spirit and scope of the present invention.

### DETAILED DESCRIPTION OF THE DRAWINGS

Composite film constructions or assemblies for use as labels in standard in-mold processes according to embodiments of the invention offer adequate barrier properties (if desired) and sealing properties such that articles made with such labels can be used for consumable products and may eliminate the need for separate seals or protective layers. The film assemblies provide full sealing capabilities to itself or to adjacent labels such that up to 100% label coverage can be attained. Furthermore, the film assembly provides sufficient bonding between layers of the film assembly to protect against film delamination. Finally, the film assembly provides sufficient bonding capabilities to a plastic shot material used for forming the molded article such that delamination between the molded article and the label is reduced or prevented altogether.

The molded articles incorporation such labels, with or without barrier properties, provide enhanced aesthetics by reducing or eliminating the occurrence of edge lift and curl, and providing additional opportunities for graphic design. For example, because precise overlap is not required, patterns and other graphic design that would otherwise not be suitable for in-mold label (e.g. patterns that are greater in length than the precise overlap dimension), can now be utilized (e.g. the overlap can be tailored to the specific pattern to provide continuous patterning of the container).

Furthermore, articles or containers made with such labels may withstand extreme processing conditions such as those associated with molding of the article by thermoforming or injection molding, sterilization processing including retort processing, high pressure pasteurization, and autoclaving, cleaning such as dishwasher, freezing, refrigeration, and microwaving, without compromising the barrier properties or structural integrity of the container.

In embodiments in which the film assembly includes one or more barrier layers, the film assembly has adequate desired barrier properties for a certain end use application. The barrier properties of the label and therefore the container can be tailored to inhibit or reduce the rate of a particular substance into and/or out of the container, prevent or reduce leaching of the label materials into the container (particularly with respect to applications in which the label is in contact with the contained product), or to keep a substance into or out of the container altogether. Such substances can include, but are not limited to, water vapor, oxygen, light (including ultraviolet), aroma, odor, flavor, printing inks (from the label and/or other surfaces of the container), adhesives from the label or surrounding container, plastic or colorants from the molded container, or any of a variety of substances. For example, the barrier properties can be tailored to allow for controlled or desired migration into and/or out of the container having the in-mold label molded thereto. In this example, the one or more barrier layers act as a semi- or impermeable membrane to protect the contents within the molded container from the surrounding environmental or other exposure that may be harmful or otherwise undesired to the contained product, and/or to balance the exposure of the contents from the surrounding environmental factors.

Because of the enhanced properties provided to the container by the composite film used as an in-mold label, the containers can be created for any of a variety of packaging applications including, but not limited to, wet or dry food products, fatty food products, beverages such as carbonated beverages, hair care products such as hair spray, shampoos, and conditioners, aromatic products such as perfumes and sprays, personal care products such as toothpastes, cosmetics, lotions, tonics, and creams, medical products such as ointments, medicines, and certain medical devices, and industrial products such as paints and adhesives. The articles or containers can come in any of a variety of unlimited shapes or sizes including bottles, cups, lidded and un-lidded containers, sealable containers, plates, bowls, blister packaging, and the like.

The articles or containers made with the in-mold labels according to embodiments of the invention offer advantages over the currently available packaging such as tin or aluminum cans and glass jars. Such advantages can include the increased flexibility in container shape because a container can be molded into virtually any shape, including sharp edges, tight curves, and steep angles. This allows for use of existing container designs, or alternatively for flexibility in container designs such that the container to become an identifier itself thereby creating potential trade dress protections. The containers according to embodiments of the invention may also recyclable when manufactured with materials having established recycling streams, such as polypropylene or polyethylene. The containers according to embodiments of the invention are also lighter in weight than traditional cans and jars such that they are more economical to ship. Furthermore, the containers can be shaped to maximize or optimize nesting or packing fraction such that less space in transport, storage, and display shelving is needed. The nature of the inmold label allows for increased graphics quality and options due to the increased printing options on a film web as compared to printing directly on the container itself, and offers increased billboard space because as the decoration or print can flow with the container shape, and graphics coverage is unlimited such that a container can have up to 100% coverage. In addition, the composite films can include a lens sheet, such as a lenticular or fly's eye lens sheet, for enhanced or eye-catching graphics including depth, 3D graphics, motion, morph, and/or flip features.

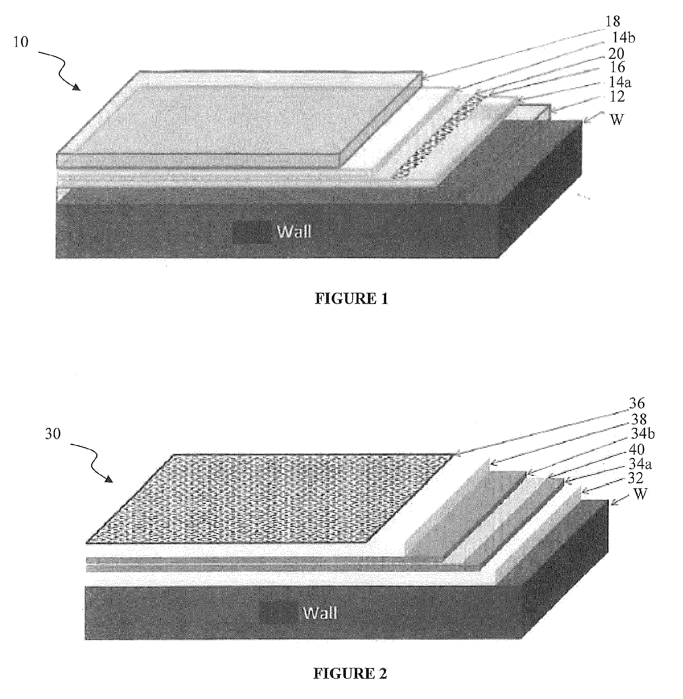

Referring to Figure 1, a self-sealing composite film assembly 10 for use in in-mold labels comprises dual barrier layers 14a and 14b with optional print layer(s) 16 therebetween, the barrier layers and print layer(s) being sandwiched between two heat-sealable layers 12, 18. Specifically, film assembly 10 includes a first heat-sealable layer or base layer 12 coupled to a first barrier layer 14a. First heat-sealable layer or base layer 12 comprises a heat-sealable film material suitable for in-mold processing conditions such that it adheres readily to a plastic shot material used for molding of an article, and readily adheres to itself by application of heat, or alternatively can be sealed by ultrasonic application of energy. Base layer 12 can comprise, for example, a transparent or opaque oriented polypropylene, polyethylene, or polystyrene heat-sealable film. Base layer 12 has a thickness from about 20 to about 75 µm and more particularly from about 40 to about 65 µm; however, as described above the thickness of the label can be thinner or thicker than the exemplary, non-limiting range, depending on the final application or desired molded product. For example, a thicker base layer may be desired to prevent or reduce the occurrence of gate wash in certain applications.

First barrier layer 14a is coupled to base layer 12. First barrier layer 14a comprises a transparent or opaque barrier film. Suitable transparent barrier films can include, for example, a chlorine-free, transparent, high oxygen and high water vapor barrier, such as a biaxially oriented polypropylene film with a sealant layer on one side. One such barrier film is available from AET Films. Barrier film 14a has a thickness from about 5 to about 40 µm, and more particularly from about 20 to about 30 µm. However, as described above the thickness of the label can be thinner or thicker than the exemplary, non-limiting range, depending on the final application or desired molded product.

Suitable opaque barrier films can include, for example, a substrate layer having a metallized layer deposited on a surface of substrate layer. One such metallized barrier film is available from AET Films. The substrate layer can comprise a transparent or opaque film material, such as polypropylene or polyethylene, and has a thickness from about 5 to about 40 µm, and more particularly from about 15 to about 25 µm. However, as described above the thickness of the label can be thinner or thicker than the exemplary, non-limiting range, depending on the final application or desired molded product.

The metallized layer can comprise, for example, a thin film (less than 5 µm) of vacuum-deposited metallic material including elemental metals such as elemental aluminum, gold or platinum, metal oxides such as aluminum oxide (alumina) or non-metallic glass materials including silicon oxide (silica). As mentioned above, "metallized layer" as used herein can comprise any of the above metal, metal oxide, or glass layers, or combinations thereof. Thicker metallized layer may be desired to prevent or reduce the occurrence of gate wash in certain applications.

In one embodiment of the invention, the metallized layer comprises alumina doped with oxygen such that metallic layer is transparent or translucent. Furthermore, alumina may be desired in certain applications because is an electric insulator. This may be important in in-mold applications because when static is used to hold the in-mold label in place during the molding process. A conductive metallized layer may create an undesired electric arc in the static hold in the mold, which can thereby shut down or have other detrimental effects on the electric power to the static hold. The label is then free to move around or fall out of the mold during molding, which results in a defective article. Examples of non-conductive metallized films can be found in U.S. Patent Application Publication No. 2011/0223362, entitled "Metallized In Mold Label and Molded Articles Having Same," incorporated herein by reference in its entirety.

In an alternative embodiment, first barrier layer 14a comprises a nanoparticle barrier seal material or coating, such as an aqueous dispersion of barrier particles, such as clay or silica, in a carrier resin, that is dried to leave an aligned layers or a plane of platelets or particles to form the barrier layer. One such material is NANOSEAL Coatings, available from NanoPack Inc. NANOSEAL is an aqueous dispersion of vermiculite platelets in polyvinyl alcohol. The platelets are 1-3 nanometers thick and 10-30 microns in breadth yielding an average aspect ratio (breadth-to-thickness) of about 10,000:1. The dried coating layer comprises about 80-100 layers of overlapping platelets of clay or silica glass of about 0.2-0.6 microns (200-600 nanometers) thick. This type of barrier coating allows for increased flexibility over continuous or solid barrier films without compromising barrier properties, and also offers excellent adhesion to films or printing inks due to its high surface energy of 50 dynes or greater.

One or more print layer(s) 16 can optionally be printed, laminated to, or deposited on first barrier layer 14a forming any of a variety of indicia or printed matter including, but not limited to, alphanumeric characters, graphics, text, product information, flood coatings, or combinations thereof. Print layer 16 can be formed from any of a number of suitable printing techniques such as, for example, flexographic, lithographic, gravure, rotogravure, digital inkjet, digital toner, screen printing, and the like and combinations thereof. Print layer 16 can be printed using traditional and non-traditional inkjet ink, dry offset ink, litho ink, flexo ink, silk screen ink, latex ink, inks using cationic additives such as those used in the rotogravure industry, and the like in one of the aforementioned printing techniques or combination of techniques. The inkjet ink used may be a traditional solvent- or UV-based ink. In one embodiment, UV curable inks can be used, such as SUNCURE inks commercially available from Sun Chemical of Carlstadt, N.J., and UV curable inks commercially available from Flint Inks of St. Paul, MN. Other suitable printing materials or media can include toners, water- or solvent-based inks, solventless inks, other forms of radiation curable inks, and combinations thereof.

Second barrier layer 14b is laminated, deposited, or applied to first barrier layer 14a with optional print layer(s) 16. Second barrier layer 14b can comprise a transparent or opaque barrier film, or a nanoparticle barrier coating, as discussed with respect to first barrier layer 14a. Second barrier layer 14b can be formed from the same material as first barrier layer 14a or a different barrier material, such as those described above. In one specific non-limiting embodiment, second barrier layer 14b is a chlorine-free, transparent, high oxygen and high water vapor barrier, such as a biaxially oriented polypropylene film with a sealant layer on one side, similar to first barrier layer 14a, such that print layer(s) 16 is viewable through second barrier layer 14b. Second barrier film 14b has a thickness from about 5 to about 40 µm, and more particularly from about 20 to about 30 µm. However, as described above the thickness of the label can be thinner or thicker than the exemplary, non-limiting range, depending on the final application or desired molded product.

In one embodiment of the invention, second barrier layer 14b is coupled to first barrier layer 14a via an adhesive layer 20 that covers at least a portion of optional print layer(s) 16. Adhesive layer 20 can comprise any of a number of suitable adhesives, such as a two-part solventless adhesive including MOR-FREE™ solventless lamination adhesive systems available from The Dow Chemical Company, and Purelam™ aromatic solventless laminating adhesive available from Ashland. Adhesive layer 20 should be of sufficient strength such that second barrier layer 14b does not separate from first barrier layer 14a during molding, or subsequent processing including, but not limited to, sterilization, cleaning or other processing steps.

Optionally, an outer surface of second barrier layer 14b can be printed forming one or more print layers (not shown) in addition to or alternatively to print layers 16 as described above with respect to print layer 16.

Second heat-sealable layer or top layer 18 is coupled to second barrier layer 14b on a side opposite first barrier layer 14a and optional print layer(s) 16 such that barrier layers 14a and 14b and optional print layer(s) 16 are sandwiched between top layer 18 and base layer 12.

Top layer 18 comprises a heat-sealable film material suitable for in-mold processing conditions such that it adheres readily to itself or other compatible heat sealable materials by application of heat, or alternatively can be sealed by ultrasonic application of energy. Top layer 18 can comprise, for example, a transparent or opaque oriented polypropylene or polyethylene heat-sealable film. Top layer 18 has a thickness from about 20 to about 75 µm and more particularly from about 40 to about 65 µm; however, as described above the thickness of the label can be thinner or thicker than the exemplary, non-limiting range, depending on the final application or desired molded product.

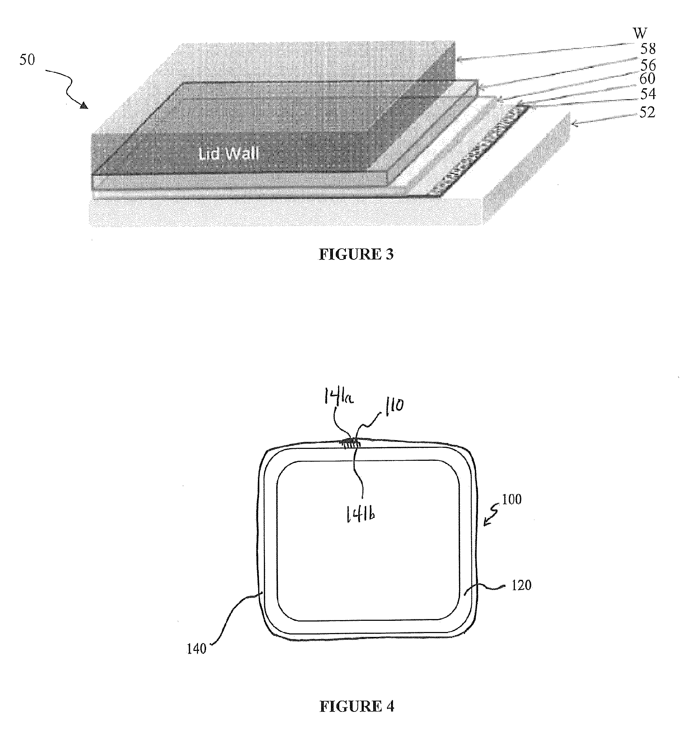

When placed in a mold, top layer 18 faces outwardly toward the cavity wall of the mold, while base layer 12 is the inner-most layer in contact with the molten plastic shot material. An overlap seam region is formed such that a portion of top layer 18 is adjacent and in contact with base layer 12, as shown in Figure 4. Upon introduction of the molten plastic shot material, the plastic shot forming wall W bonds directly to base layer 12, while providing sufficient heat to cause overlapping portions of top layer 18 and base layer 12 to fuse or seal to each other at a molecular level, to reduce or eliminate the occurrence of edge lift, curl, or ruffle.

Referring to Figure 2, in an alternative embodiment of the invention, a self-sealing composite film assembly 30 for use in in-mold labels comprises dual barrier layers 34a and 34b sandwiched between two heat-sealable layers 32, 38. One or more optional print layer(s) 36 are deposited on an outwardly-facing surface of top layer 38. Base layer 32 and top layer 38 comprise a heat sealable film such as those described with respect to base layer 12 and top layer 18 with respect to Figure 1. In this non-limiting embodiment of Figure 2, base layer 32 and top layer 38 are opaque oriented polypropylene heat sealable films.

First barrier layer 34a is coupled to base layer 32. First barrier layer 34a comprises a transparent or opaque barrier film, or alternatively a barrier coating, such as those films and coatings described with respect to first barrier layer 14a of Figure 1. In this non-limiting embodiment of Figure 2, first barrier layer 34a comprises an opaque metallized film.

Similarly, second barrier layer 34b is coupled to top layer 28, and comprises a transparent or opaque barrier film, or alternatively a barrier coating, such as those films and coatings described with respect to second barrier layer 14b of Figure 1. In this non-limiting embodiment of Figure 2, second barrier layer 34b comprises an opaque metallized film.

In this embodiment of the invention, second barrier layer 34b is coupled to first barrier layer 34a via an adhesive layer or lamination adhesive 40, as described with respect to adhesive layer 20 of Figure 1. Adhesive layer 40 should be of sufficient strength such that second barrier layer 34b does not separate from first barrier layer 34a during molding, or subsequent processing including, but not limited to, sterilization, cleaning or other processing steps.

One or more print layer(s) 36 can optionally be printed, laminated to, or deposited on an outer-facing surface of top layer 38. One or more print layer(s) 36 can formed of any of a variety of materials and methodologies as described with reference to print layer(s) 16 of Figure 1, and can form any of a variety of indicia or printed matter including, but not limited to, alphanumeric characters, graphics, text, product information, flood coatings, or combinations thereof.

When placed in a mold, top layer 38 with optional print layer(s) 36 faces outwardly toward the cavity wall of the mold, while base layer 32 is the inner-most layer in contact with the molten plastic shot material. An overlap seam region is formed such that a portion of top layer 38 is adjacent and in contact with base layer 32, similar to the overlap shown in Figure 4. Upon introduction of the molten plastic shot material, the plastic shot forming wall W bonds directly to base layer 32, while providing sufficient heat to cause overlapping portions of top layer 38 and base layer 32 to fuse or seal to each other at a molecular level, to reduce or eliminate the occurrence of edge lift, curl, or ruffle. The cavity wall is sufficiently cooled so as not to degrade print layer(s) 36.

In an alternative embodiment, and referring to Figure 3, a self-sealing composite film assembly 50 is depicted for peel and seal applications, such as sealing a lid to a base or tub. Film assembly 50 generally includes a moldable, sealable, and peelable base layer film 52, one or more optional print layer(s) 54, a barrier layer 56, and a heat sealable top layer 58. Top layer 58 and base layer 52 sandwich barrier layer 54 and print layer(s) 54 therebetween.

Base film 52 comprises a moldable, sealable, and peelable base layer for sealing application, with the application of heat or ultrasonic energy, to a polymeric article, such as a base of a lidded article. Base layer 52 has a thickness from about 20 to about 150 µm and more particularly from about 90 to about 120 µm. However, as described above the thickness of the label can be thinner or thicker than the exemplary, non-limiting range, depending on the final application or desired molded product. Suitable materials for base layer 52 can include, but are not limited to, lidding materials supplied by KWH Plast, Etimex or American Profol Inc.

One or more print layer(s) 54 can optionally be printed, laminated to, or deposited on an outer-facing surface of base layer 52. One or more print layer(s) 54 can be formed of any of a variety of materials and methodologies as described with reference to print layer(s) 16 of Figure 1, and can form any of a variety of indicia or printed matter including, but not limited to, alphanumeric characters, graphics, text, product information, flood coatings, or combinations thereof.

Barrier layer 56 is coupled to base layer 52, covering optional print layer(s) 54. Barrier layer 56 can comprise a transparent or opaque barrier film, or alternatively a barrier coating, such as those films and coatings described with respect to first barrier layer 14a of Figure 1. In this non-limiting embodiment of Figure 3, barrier layer 56 comprises a chlorine-free, transparent, high oxygen and high water vapor barrier, such as a biaxially oriented polypropylene film with a sealant layer on one side. Optional print layer(s) 54 are viewable through barrier layer 56.

Barrier layer 56 is coupled to base layer 52 with print layer(s) 54 via an adhesive layer or lamination adhesive 60, as described with respect to adhesive layer 20 of Figure 1. Adhesive layer 60 should be of sufficient strength such that barrier layer 56 does not separate from base layer 52 during molding, or subsequent processing including, but not limited to, sterilization, cleaning or other processing steps.

Top layer 58 comprises a heat-sealable film material suitable for in-mold processing conditions such that it adheres readily to itself or other compatible heat sealable materials by application of heat, or alternatively can be sealed by ultrasonic application of energy. Further, top layer 58 readily bonds to a plastic shot material used for molding of an article, such as a lid of a container. In this non-limiting embodiment of Figure 3, top layer 68 can comprise, for example, a transparent or opaque oriented polypropylene or polyethylene heat-sealable film.

When placed in a mold, base layer 52 faces outwardly toward the cavity wall of the mold, while top layer 58 is the inner-most layer in contact with the molten plastic shot material. An optional overlap seam region is formed such that a portion of top layer 58 is adjacent and in contact with base layer 52, as shown in Figure 4. Upon introduction of the molten plastic shot material, the plastic shot forming wall W bonds directly to top layer 58, while providing sufficient heat to cause overlapping portions of top layer 58 and base layer 52 to fuse or seal to each other at a molecular level, to reduce or eliminate the occurrence of edge lift, curl, or ruffle.

In the embodiment in which the formed wall W comprises the wall of a lid to a container, composite film assembly 50 is then sealed to a base of the container. For example, assembly 50 is positioned over a base after it is filled with a consumable product, such that base layer 52 is in contact with a sealing area, such as a polymeric rim or flange, of the base. Application of heat and/or ultrasonic energy causes the base layer to fuse or seal, and preferably hermetically seal, to the sealing area of the base container.

One of ordinary skill in the art would recognize that the constructions of Figures 1-3 are exemplary only, and the materials and films can be modified and combined based on the desired properties of the final product or container into which the composite films will be incorporated. For example, cavitated films can be incorporated or substituted into any of the assemblies as the base film, the barrier layer, the top film, or any combination thereof such that one or more heat sealable films are not necessary. For example, a top film can comprise a heat sealable film that is sealable at a molecular level to the base film, which can comprise, for example, a cavitated film. A reverse configuration can also be contemplated. Additionally or alternatively, in applications where barrier properties are not required, the one or more barrier layers can be omitted, such as to form, in one non-limiting example, an entirely transparent sealable label for aesthetic purposes only. Additionally or alternatively, sealable materials or layers, such as heat sealable layers, can be entirely omitted in application in which a compression seal, and not a full molecular bonding seal, is sufficient, such as, for example, a non-overlapping barrier construction.

In one particular embodiment, a composite film assembly for use in overlapping or non-overlapping barrier molding applications includes one or more barrier layers sandwiched (either directly or indirectly) between a first or top film layer and a second or bottom film layer, wherein the assembly is substantially free of ethylene vinyl alcohol (EVOH). One or more print layers can be sandwiched between the films and/or deposited on an external surface of the top and/or bottom film.

Furthermore, the constructions described above can be combined with one or more constructions or materials described in U.S. Application No. 13/834,035, filed March 15, 2013, which is incorporated herein in its entirety by reference.

It is also recognized that alternatively to or in addition to lamination techniques, co-extrusion of the different layers of the films, such that an adhesive layer may be omitted can also be contemplated.

Table 2 below lists barrier proprieties of commercially available film materials for use as barrier layers in embodiments of the present invention, compared to baseline materials having an EVOH layer. Film 1 is an EVOH film used in films having barrier properties as described in the Background section; Film 2 is a commercially available film of the prior art incorporating Film 1; Film 3 is also a commercially available film of the prior art incorporating Film 1; Films 4-6 are a commercially available barrier films suitable for use in the embodiments described above.

**Table 2: Barrier film properties of various films**

| Film ID | Oxygen Barrier | Vapor Barrier | Oxygen Barrier with Retort Properties | Oxygen with Retort and Peelable Properties | Light Barrier | Aroma/ Flavor Barrier | Comments |
|---|---|---|---|---|---|---|---|
| 1-EVOH layer | 0.006-0.12 cc/100 in² per day | | Poor | Poor | Poor | N/A | Crystallinity and thickness increases barrier; temperature and humidity decrease oxygen barrier. |
| 2-EVOH film | 0.8 cc/m² per day | Good | Fair | N/A | TBD | TBD | EVOH films acceptable for food packaging. Mono-web 90 micron layered film (high barrier) ; transparent or opaque |
| 3-EVOH film | 2 cc/m² per day | Good | Fair | N/A | TBD | TBD | EVOH film mono-web 80 micron (medium barrier) white or transparent |
| 4-PP film | 0.35 cc/m² per day @23C, 50% RH | N/A | TBD | Poor | Good | TBD | 82 micron white polypropylene cast film |
| 5-PP film | 0.17 cc/100in² per day | 0.18 g/100in² per day | TBD | N/A | Poor | Good | Transparent 88 gauge oriented polypropylene; Chlorine fee, transparent, high oxygen and high water vapor barrier, biaxially oriented polypropylene; sealable on one side, printbable high barrier functional surface. Yield (in²/lb) 32,700 Basis weight (g/m²) 13.2 |
| 6-metallized PP film | 0.0041 cc/100in² per day (75 gauge) | 0.10 g/100in² per day (75 gauge) | TBD | N/A | Good | N/A | Ultra high barrier film, metallized coextruded, solid core white, biaxially oriented polypropylene film; sealable one side via sealant layer, and metallized on other side; available from 55-155 gauge Gauge 75; Yield (in²/lb) 40,500 Basis weight (g/m²) 17.4 |

Referring to Figure 4, a molded article incorporating a composite film according to embodiments of the invention is shown at 100. Molded article 100 includes a plastic base 120 formed from the plastic shot material, and an in-mold label 140 formed from any of the composite film discussed *supra.* At least one region of overlap 110 is formed by label 140, and upon application of heat, for example, a top layer of label 140 molecularly bonds to a bottom layer of label 140 to form an integral, continuous overlap seam with little to no edge lift, curl, or ruffle, and optimally a destructible bond as described above.

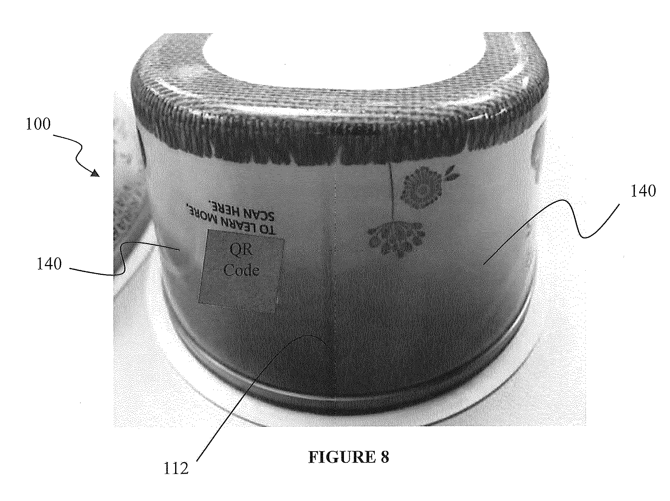

Referring to Figures 7 and 8, overlap regions 110 can be formed by wrapping the label 140 onto itself as shown at seam 112 in Figure 8, and/or by forming overlapping seams 114 of adjacent labels 140a and 140b as shown in Figure 7. This allows for up to 100% label coverage of a container.

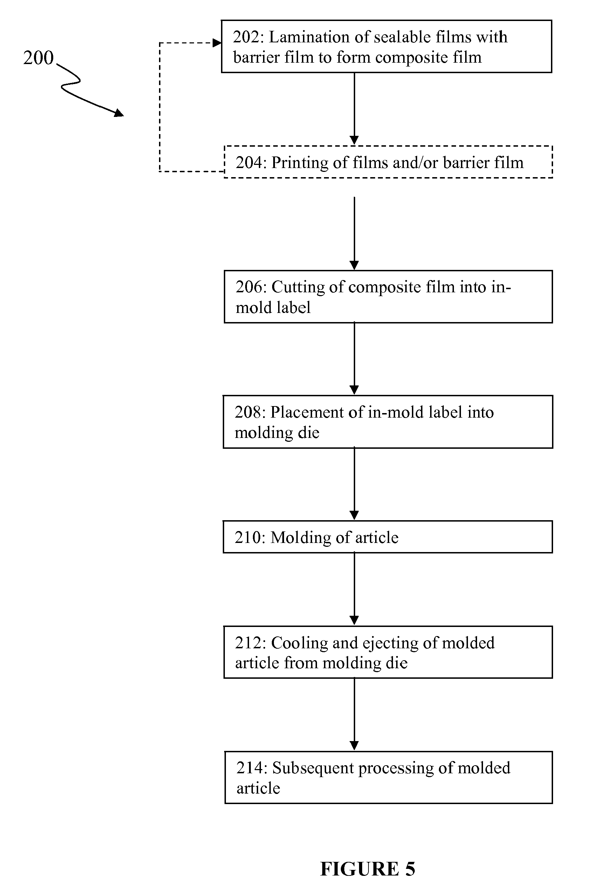

Figure 5 is a flow diagram showing method 200 for producing a molded article, such as containers, lidded containers, cups, plates, packaging, or any of a variety of molded articles having an in-mold label with barrier properties. At 202, a composite film assembly having barrier properties, as described in any of Figures 1-3, is constructed, such as, by lamination of web or sheet materials for the individual layers. Lamination can be accomplished using a nip roller, belt laminator, or any suitable lamination technique. Alternatively, co-extrusion of one or more layers of the composite films can be used in lieu of or in combination with lamination. When co-extrusion of one or more layers is used, one or more of the adhesive layers above may be eliminated. Furthermore, the use of a continuous web of film for each layer is described; however, one of ordinary skill in the art would recognize that individual sheets can also be utilized.

At 204, if a print layer is desired, a surface of the base layer, top layer, and/or surface of the barrier layer depending on the desired film construction. If it is desired that the print layer is sandwiched between base and top layers, then the appropriate film is printed before lamination. If an outer surface of either the barrier or base film is to be printed, then the appropriate film is printed before and/or after lamination.

At 206, the laminated composite film assembly is then converted or cut to the desired inmold label dimensions to form a plurality of in-mold labels. The converting process can be accomplished via die cutting, rotary die cutting, laser cutting, or any of a variety of converting processes.

At 208, an in-mold label is then placed via hand or robotics into a mold cavity of a mold portion of a molding tool. In one embodiment, the in-mold label overlaps itself to seal upon itself, any other adjacent labels in the mold, as well as the plastic shot material. Alternatively, a butt splice or other splices can be used, or no splice is used such that opposing ends of the label do not touch or are not proximate one another depending on the geometric application of the label. One type of an injection molding assembly is described for exemplary purposes only, but other injection molding devices may also be used. The mold cavity of the molding tool is specifically configured to accommodate the in-mold label. The in-mold label is placed in the mold cavity so that the desired surface of the label is exposed to the molten plastic in the mold cavity during the subsequent molding step 210.

At 210, the container or article is molded. In one embodiment, the molding step 210 is completed by plastic injection molding processes. In this case, the injection molding tool in a single-stage reciprocating screw type which tends to thoroughly prepare material for injection and often are faster, but other injection molding tools may be utilized such as a conventional single-stage plunger type or a two-stage plunger or screw-plasticizer type. During operation a raw plastic (i.e., the material shot of thermoplastic material) is fed into a material hopper where it contacts an injector screw. As the screw is turned by a screw drive motor, a screw is pushed backward and the material shot is forced into a chamber of a heating cylinder. When enough material to fill the mold cavity has been prepared (i.e., heated to between 300 and 700° F depending on the type of plastic), the screw drive motor is shut off to stop turning the screw. A pull-in cylinder is operated to move the screw on a slide to ram the material shot through an inlet nozzle into the mold cavity of the mold.

The plastic liquid resin is injected into the mold cavity defined by the passages between and within the mold top, the mold body, and a center die. The plastic is injected under high heat and pressure (5000 to 50,000 psi) and contacts the exposed portions of the label. The exposed and heated portion of the label remains a liquid for a very brief time and then re-solidifies in the mold as the entire container cools in step 212. This process creates an almost instant and substantially permanent bond at an interface between the in-mold label and the plastic shot material of the container.

At 212, the injected material in the mold is allowed to cool within until it has hardened adequately. At this point, the hardened and formed container with an integrally bonded label having barrier properties is ejected by an ejector positioned in the mold body, and the container fabrication process 200 is ended. Additional information regarding molding using an in-mold label or insert having a lens sheet is described in U.S. Patent No. 7,153,555, entitled "Plastic Objects Including Lenticular Lens Sheets," incorporated herein by reference in its entirety.

At 214, the article or container can then be filled with the desired material, such as a food product, pet product, medicine product, or industrial product, to be packaged. Subsequent processing, such as sterilization processing including retort processing, or high pressure pasteurization, can then be performed on the container with in-mold label without significant reduction, degradation or compromise of the barrier properties. In the event of a peel and seal application, the barrier lid, as described in Figure 3, is sealed via application of heat or ultrasonic energy, to seal the base film of the lid to the polymeric body.

In alternative embodiments (not shown), in addition to or as an alternative to one or more barrier layers or films of the composite films above, the composite films comprise a reflective layer such that the composite film has reflective properties. When such composite film is used as an in-mold label when molding an article, the final molded article similarly has reflective properties on exterior and/or interior surfaces of the article.

In one embodiment of the invention, a reflective composite film comprises a base film, and a reflective film coupled thereto. The reflective film can comprise a carrier film and a reflective material, such as a metallic material (e.g. gold, silver, aluminum, etc.) vacuum or vapor deposited, laminated, coated, printed, or otherwise applied thereon, forming a reflective layer on the base film. The reflective layer can cover all or portions of the carrier film as desired. Suitable films can include reflective films available from 3M Company, such as those commercially available as 3M™ Scotchlite™ Removable Reflective Graphic Films, in various colors and gauges, and optionally comprising a micro-replicated surface of micro features to enhance reflectivity. Alternatively, the reflective film comprises reflective particles, such as metallic or foil materials, distributed throughout the carrier film. The reflective films can have a thickness for example, from about 5 microns or les to about 10 mils (about 25.4 µm to about 254 µm).

In this embodiment, the base film can comprise, for example, an opaque or transparent, and optionally cavitated, film material suitable for in-mold processing conditions such that it adheres readily to a plastic shot material used for molding of an article, such as those described *supra.* The base film can comprise, for example, a polypropylene or polyethylene film. The base film has a thickness from about 20 to about 75 µm and more particularly from about 40 to about 65 µm; however, as described above the thickness of the label can be thinner or thicker than the exemplary, non-limiting range, depending on the final application or desired molded product.

The reflective film having a reflective material thereon or therein can cover an entire surface of the base film, or only portions thereof. The reflective film can be applied to form graphics or text, and/or can form a continuous layer. Upon placement into the mold, the base layer is in contact to and bonds with the plastic shot material to form a molded article having the reflective layer bonded thereto.

The base film is coupled to the reflective film via an adhesive layer. The adhesive layer can comprise any of a number of suitable adhesives as described above with respect to Figure 1. Alternatively, the base film and reflective film are coextruded to form the composite reflective film.

Optionally, an outer surface or reflective layer can be printed on the base film (or carrier film) forming one or more print layers as described above with respect to print layer 16 of Figure 1.

In some embodiments, a reflective layer of the reflective film comprises one or more barrier properties as described *infra* such that the reflective film serves a second function as a barrier film.

When placed in a mold, the base layer faces inwardly such that it is the inner-most layer in contact with the molten plastic shot material. The plastic shot bonds directly to the base layer.

Alternatively, the base layer can be printed with a reflective ink, rather than a separate reflective layer, and can optionally comprise a transparent protective film or coating over the reflective ink.

Articles having reflective properties can be formed using the in-mold label having the reflective layer. Such articles can comprise any of a variety of articles in which reflective properties are desired. Such articles can include, but are not limited to, signage such as road or construction signage, construction cones, garbage can, recycling bins, mailboxes, recreational helmets such as bicycle, motorcycle, or skateboarding helmets, sport helmets such as football or batting helmets, lawn mower parts such as start steps and platforms, ladders, any of a variety of molded parts for automobiles, recreational vehicles, boats, buoys, floats, and the like, water bottles, flashlights, or essentially any form of molded part that is desired to have reflective properties.

In general, and according to non-limiting embodiments, a composite film assembly for use as in-mold labels in molded articles, the composite film comprises a first film defining a top layer; a second film defining a bottom layer, wherein the first and second films are adapted to be seal to themselves and each other if overlapped to form a curl resistant or peel resistant overlap seam; and a first barrier layer operably coupled to at least one of the first and second sealable films and sandwiched therebetween, wherein the composite film assembly is bondable via the bottom layer to a material forming the molded article. The composite film assembly can provide a water vapor barrier property defined as a Water Vapor Transmission Rate (WVTR) of 3.0 g/100in² per 24 hours at 100°F/90%RH or less. The composite film can provide an oxygen barrier property defined as an Oxygen Transmission Rate (O2TR) of 10.0 cc/m² per 24 hours at 73°F/0%RH or less. The first and second films can comprise a heat sealable film, such as, an oriented polypropylene heat sealable film. The barrier layer can comprise a substrate layer, and a metallized and/or glass layer and the metallized and/or glass layer can comprise at least one of alumina and silica.

The composite film assembly can comprise a print layer, the print layer being deposited on an outermost major surface of the first film or the second film such that the print layer is not sandwiched between the first and second films. Additionally or alternatively, the composite film assembly can comprise a print layer, the print layer being deposited on an innermost major surface of the first film or the second film, or on the first barrier layer, such that the print layer is sandwiched between the first and second films.

In an embodiment, the first barrier layer and at least one of the first and second films are laminated together, and wherein an adhesive layer is sandwiched between the barrier film and the one or more films. In an embodiment, the first barrier layer and the base film are coextruded. The barrier layer can comprise a metallized biaxially oriented polypropylene film, or an unmetallized biaxially oriented polypropylene film. The barrier layer can be formed from a dispersion of barrier nanoparticles in a carrier. The assembly can further comprise a second barrier layer operably coupled to the first barrier layer, and sandwiched between the first and second layers. The first and second barrier layers can be formed of the same or different materials.

In embodiment, an in-mold label formed from the composite film assembly. For example, a composite film assembly for use as in-mold labels in molded articles can comprise a first film defining a top layer; and a second film defining a bottom layer, wherein at least one of the first and second films comprises a heat sealable material such that the first and second films are sealable to themselves and each other in an optional overlap region to form a curl resistant or peel resistant bond, and wherein the composite film assembly is bondable via the bottom layer to a material forming the molded article. The assembly can further comprise one or more barrier films sandwiched between the first and second films.

A method of forming a molded article with an in-mold label can comprise: providing at least one in-mold label comprising a composite film assembly, the composite film including a first film defining a top layer, and a second film defining a bottom layer, wherein at least one of the first and second films comprises a heat sealable material; placing the at least one in-mold label in a mold cavity to form at least one region of label overlap; introducing a molten plastic shot material to the mold cavity, wherein the plastic shot material contacts the bottom layer of the at least one in-mold label to bond thereto, and wherein heat from the shot material causes the first and second films to molecularly bond in the at least one region of label overlap to form a curl resistant or peel resistant bond at the at least one region of label overlap; and cooling the plastic shot material to form the molded article, wherein the in-mold label is bonded to and structurally integral with the molded article. The composite film assembly further comprises one or more barrier films sandwiched between the first and second films, such that the in-mold label provides one or more barrier properties to the molded article. In embodiments, the molded article comprises a plurality of overlapping in-mold labels, such that 100% label coverage is achieved.

In another embodiment in addition to or as an alternative to the embodiments described above, a composite film assembly for use as in-mold labels in molded articles can comprise a first film defining a top layer; a second film defining a bottom layer; and a first barrier layer operably coupled to at least one of the first and second films and sandwiched therebetween, wherein the composite film assembly is bondable to a material forming the molded article, and wherein the composite film assembly is substantially free of EVOH.

The foregoing descriptions present numerous specific details that provide a thorough understanding of various embodiments of the invention. It will be apparent to one skilled in the art that various embodiments, having been disclosed herein, may be practiced without some or all of these specific details. In other instances, components as are known to those of ordinary skill in the art have not been described in detail herein in order to avoid unnecessarily obscuring the present invention. It is to be understood that even though numerous characteristics and advantages of various embodiments are set forth in the foregoing description, together with details of the structure and function of various embodiments, this disclosure is illustrative only. Other embodiments may be constructed that nevertheless employ the principles and spirit of the present invention. Accordingly, this application is intended to cover any adaptations or variations of the invention.

## Claims

1. A composite film assembly for use as in-mold labels in molded articles, the composite film comprising:
a first film defining a top layer;
a second film defining a bottom layer, wherein the first and second films are adapted to be seal to themselves and each other if overlapped to form a curl resistant or peel resistant overlap seam; and
a first barrier layer operably coupled to at least one of the first and second sealable films and sandwiched therebetween,
wherein the composite film assembly is bondable via the bottom layer to a material forming the molded article.

2. The composite film assembly of claim 1, wherein the composite film assembly provides a water vapor barrier property defined as a Water Vapor Transmission Rate (WVTR) of 3.0 g/100in² per 24 hours at 100°F/90%RH or less.

3. The composite film assembly of claim 1 or 2, wherein the composite film assembly provides an oxygen barrier property defined as an Oxygen Transmission Rate (O2TR) of 10.0 cc/m² per 24 hours at 73°F/0%RH or less.

4. The composite film assembly of any of the preceding claims, wherein the first and second films comprise an oriented polypropylene heat sealable film.

5. The composite film assembly of any of the preceding claims, wherein the barrier layer comprises a substrate layer, and a metallized and/or glass layer.

6. The composite film assembly of claim 5, wherein the metallized and/or glass layer comprises at least one of alumina and silica.

7. The composite film assembly of any of the preceding claims, further comprising a print layer, the print layer being deposited on an outermost major surface of the first film or the second film such that the print layer is not sandwiched between the first and second films.

8. The composite film assembly of any of the preceding claims, further comprising a print layer, the print layer being deposited on an innermost major surface of the first film or the second film, or on the first barrier layer, such that the print layer is sandwiched between the first and second films.

9. The composite film assembly of any of the preceding claims, wherein the first barrier layer and at least one of the first and second films are laminated together, and wherein an adhesive layer is sandwiched between the barrier film and the one or more films.

10. The composite film assembly of any of the preceding claims, wherein the first barrier layer and the base film are coextruded.

11. The composite film assembly of any of the preceding claims, wherein the barrier layer comprises a metallized biaxially oriented polypropylene film, or an unmetallized biaxially oriented polypropylene film.

12. The composite film assembly of any of the preceding claims, wherein the barrier layer is formed from a dispersion of barrier nanoparticles in a carrier.

13. The composite film assembly of any of the preceding claims, further comprising a second barrier layer operably coupled to the first barrier layer, and sandwiched between the first and second layers.

14. An in-mold label for molded articles, the in-mold label formed from the composite film of any of the preceding claims, wherein the composite film assembly is bondable via the bottom layer to a material forming the molded article.

15. A method of forming a molded article with an in-mold label, the method comprising:
providing at least one in-mold label comprising the composite film assembly of any of the preceding claims;
placing the at least one in-mold label in a mold cavity to form at least one region of label overlap;
introducing a molten plastic shot material to the mold cavity, wherein the plastic shot material contacts the bottom layer of the at least one in-mold label to bond thereto, and wherein heat from the shot material causes the first and second films to molecularly bond in the at least one region of label overlap to form a curl resistant or peel resistant bond at the at least one region of label overlap; and
cooling the plastic shot material to form the molded article, wherein the in-mold label is bonded to and structurally integral with the molded article.
